# EUROPÄISCHE PATENTSCHRIFT

(11) **EP 2 941 380 B1**
(45) Veröffentlichungstag und Bekanntmachung des Hinweises auf die Patenterteilung: **23.05.2018**
(21) Anmeldenummer: 13791970.0
(22) Anmeldetag: 11.11.2013
(51) Int. Cl.: B62D 37/06, B62J 27/00

(54) **VERFAHREN UND VORRICHTUNG ZUR FAHRSTABILISIERUNG EINES MOTORISIERTEN ZWEIRADS MIT DOPPEL GYROSKOPEN VORRICHTUNG**
METHOD AND DEVICE FOR THE DRIVING STABILIZATION OF A MOTORIZED TWO-WHEELED VEHICLE BY MEANS OF A DOUBLE-GYROSCOPE DEVICE
PROCÉDÉ ET DISPOSITIF DE STABILISATION DE CONDUITE POUR DEUX-ROUES MOTORISÉ COMPRENANT UN DISPOSITIF À DOUBLE GYROSCOPE.

(30) Priorität: 02.01.2013 DE 102013200020
(43) Veröffentlichungstag der Anmeldung: 11.11.2015
(73) Patentinhaber: Robert Bosch GmbH, 70442 Stuttgart (DE)
(72) Erfinder: KLEWS, Matthias, 72076 Tuebingen (DE)
(86) Internationale Anmeldenummer: PCT/EP2013/073486
(87) Internationale Veröffentlichungsnummer: WO 2014/106547

(56) Entgegenhaltungen:
- EP-A1- 0 941 914
- GB-A- 980 529
- JP-A- 2012 201 254

## Beschreibung

### Stand der Technik

In zweispurigen Kraftfahrzeugen sind Systeme zur Beeinflussung des Gierwinkels in kritischen Fahrsituationen weit verbreitet und zur Unfallvermeidung äußerst effektiv. Diese Systeme, welche sich durch gezieltes und unsymmetrisches Bremsen einzelner Räder auszeichnen, kommen bei Zweirädern bauartbedingt nicht in Frage. Die Motorradfahrdynamik wird stark durch die Kreiselwirkung der Räder und der Änderung der Drehimpulse durch Lenkmanöver bestimmt und stabilisiert. Ein Verfahren zur Fahrstabilisierung eines motorisierten Zweirads und das Steuergerät dafür ist in der GB 980 529 A offenbart.

### Offenbarung der Erfindung

Die Erfindung betrifft ein Verfahren zur Fahrstabilisierung eines motorisierten Zweirads, bei dem zwei nebeneinander angeordnete Kreisel mit zueinander paralleler Drehachse vorhanden sind, wobei die Kreisel jeweils um eine Verschwenkungsachse senkrecht zur Drehachse verschwenkbar, wobei die Verschwenkungsachsen der beiden Kreisel ebenfalls parallel zueinander sind,
- wobei die Kreisel in zueinander entgegengesetzter Drehrichtung um ihre Drehachsen rotieren,
- wobei bei einem detektierten instabilen Fahrverhalten des Zweirads die beiden drehenden Kreisel um ihre jeweilige Verschwenkungsachse mit einer ersten Winkelgeschwindigkeit verschwenkt werden, wobei die Verschwenkungsrichtungen entgegengesetzt zueinander sind,
- wobei anschließend die beiden drehenden Kreisel um ihre jeweilige Verschwenkungsachse mit einer zweiten Winkelgeschwindigkeit wieder in ihre Ursprungsorientierung zurückverschwenkt werden,
- wobei die Kreisel durch Elektromotoren angetrieben werden und mittels Elektromotoren verschwenkt werden.

Durch die erfindungsgemäße Anordnung und Ansteuerung der Kreisel ist eine wirkungsvolle Möglichkeit zur Aufbringung eines gezielten Drehmoments auf das Fahrzeug gegeben.

Eine vorteilhafte Ausgestaltung der Erfindung ist dadurch gekennzeichnet, dass die erste Winkelgeschwindigkeit größer als die zweite Winkelgeschwindigkeit ist. Durch die gezielte Wahl der ersten Winkelgeschwindigkeit kann die Größe des auf das Fahrzeug ausgeübten Drehmoments vorgegeben werden. Die Rückdrehung der Kreisel um die Verschwenkungsachse sollte dagegen möglichst langsam erfolgen, so dass ein möglichst geringes Drehmoment auf das Fahrzeug wirkt.

Eine vorteilhafte Ausgestaltung der Erfindung ist dadurch gekennzeichnet, dass die Drehachsen der Kreisel in Längsrichtung des Zweirads weisen und dass die Verschwenkungsachsen der Kreisel in Querrichtung des Zweirads weisen. Durch diese spezielle Konfiguration wird ein Giermoment auf das Fahrzeug aufgebracht.

Eine vorteilhafte Ausgestaltung der Erfindung ist dadurch gekennzeichnet, dass ein instabiles Fahrverhalten dann als vorliegend detektiert wird, wenn der Schwimmwinkel des Zweirads und/oder der Schräglaufwinkel des Hinterrads des Zweirads einen vorgegebenen Grenzwert überschreitet.

Eine alternative vorteilhafte Ausgestaltung der Erfindung ist dadurch gekennzeichnet, dass ein instabiles Fahrverhalten dann als vorliegend detektiert wird, wenn die Änderung des Schwimmwinkels pro Zeiteinheit und/oder wenn die Änderung des Schräglaufwinkels des Hinterrads pro Zeiteinheit einen vorgegebenen Grenzwert überschreitet.

Bei diesen letztgenannten Ausgestaltungen wird die Tatsache ausgenutzt, dass große Schwimmwinkel oder Schräglaufwinkel des Hinterrads oder starke zeitliche Zuwächse dieser Größen ein Indiz für ein instabiles Fahrverhalten sind.

Eine vorteilhafte Ausgestaltung der Erfindung ist dadurch gekennzeichnet, dass die beiden Kreisel bei einem detektierten instabilen Fahrverhalten um den gleichen Winkel und mit derselben Winkelgeschwindigkeit, aber in entgegengesetzte Richtung, verschwenkt werden. Durch das symmetrische Verschwenken der Kreisel wird gewährleistet, das lediglich ein in der Rotationsebene der Kreisel liegender Drehmomentenvektor entsteht, welcher keine aus der Rotationsebene her ausweisende Komponenten aufweist.

Eine vorteilhafte Ausgestaltung der Erfindung ist dadurch gekennzeichnet, dass die beiden Kreisel baugleich sind und mit derselben Winkelgeschwindigkeit, jedoch mit entgegengesetzter Drehrichtung, rotieren. Dadurch wird sichergestellt, dass das Kreiselsystem im nichtverschwenkten Grundzustand einen Drehimpuls von Null aufweist.

Eine vorteilhafte Ausgestaltung der Erfindung ist dadurch gekennzeichnet, dass es sich bei dem Zweirad um ein Motorrad handelt.

Weiter umfasst die Erfindung eine Vorrichtung, enthaltend Mittel, die zur Durchführung der erfindungsgemäßen Verfahren ausgestaltet sind. Bei dieser Vorrichtung handelt es sich um ein Steuergerät, welches mit dem Programmcode zur Durchführung der erfindungsgemäßen Verfahren ausgestattet ist.

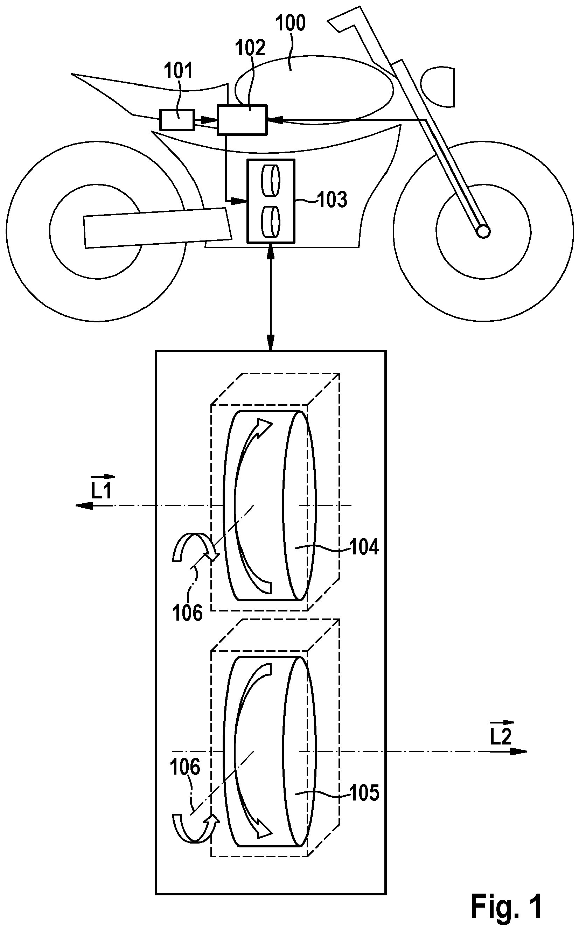

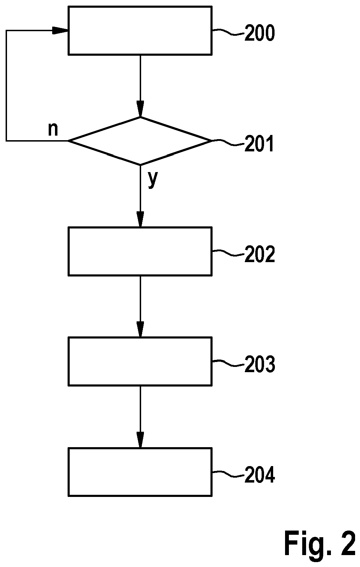

Die Zeichnung umfasst die Figuren 1 und 2.
Figur 1 zeigt ein Motorrad mit dem eingezeichneten Kreiselsystem sowie ein Detailbild des Kreiselsystems.
Figur 2 zeigt den Ablauf einer Ausführungsform des erfindungsgemäßen Verfahrens.

In kritischen Fahrsituationen, in denen das Heck eines Motorrads auszubrechen droht, wird durch Kreiselsysteme ein zusätzliches Drehmoment um die Gierachse erzeugt, so dass das Motorrad wieder in einen stabilen und vom Fahrer kontrollierbaren Zustand überführt wird.

Dazu werden zwei rotationssymmetrische Körper im Motorrad verbaut, welche sich während der Fahrt permanent mit konstanter Drehzahl drehen. Die Drehrichtungen der beiden Kreisel verlaufen außerhalb kritischer Situationen parallel und sind gegenläufig, so dass sich die Drehimpulse aufheben und keine Beeinflussung der Fahrdynamik auftritt. In kritischen Fahrsituationen wird dann gegebenenfalls durch entsprechendes Verdrehen der Kreisel-Drehachsen ein Giermoment erzeugt, das einem Ausbrechen der Fahrzeugachse entgegenwirkt.

Es werden zwei Kreiselsysteme im Motorrad verbaut. Diese bestehen jeweils aus einem mit dem Motorradrahmen fest verbundenen Gehäuse, das einen rotationssymmetrischen Körper enthält. Der Körper ist um eine Drehachse entlang seiner Rotationssymmetrieachse gelagert und wird nach dem Starten des Fahrzeugs und während der Fahrt nach Bedarf durch einen Elektromotor um diese Achse auf eine vorgegebene Drehzahl beschleunigt. Die Drehachsen der beiden Kreisel sind zunächst parallel und die Drehrichtungen sind gegenläufig, so dass sich auch bei der Bewegung des Motorradrahmens die Kreiselwirkungen aufheben.

Die beiden Kreisel sind um eine weitere Achse drehbar aufgehängt, welche quer zur Kreisel-Rotationsrichtung verläuft und quer zum Rahmen des Motorrads verläuft, d.h. in Motorradquerrichtung. Die Verdrehung um diese Achse erfolgt ebenfalls durch einen Elektromotor. Werden die beiden Kreiseldrehachsen um den gleichen Winkelbetrag gegenläufig um die weitere Achse verdreht, dann ergibt sich ein in die Motorradhochachse weisender Drehimpuls, welcher mit wachsendem Drehwinkel zunimmt.

Die beschriebene Anordnung ist in Fig. 1 skizziert. Dort ist oben ein Motorrad 100 mit Inertialsensoren 101 und einem Steuergerät 102 dargestellt. Weiter ist dort das Doppelkreiselsystem 103 eingezeichnet, welches unten detailliert dargestellt ist. Dieses besteht aus zwei übereinander angeordneten Kreiseln 104 und 105. Der obere Kreisel 104 dreht sich, wenn man das Motorrad von vorne betrachtet, im Uhrzeigersinn, der untere Kreisel 105 dreht sich, ebenfalls von vorne betrachtet, gegen den Urzeigersinn. Der obere Kreisel weist einen in Richtung Motorradrückseite weisenden Drehimpuls L1 auf, der untere Kreisel einen in Richtung Motorradvorderseite weisenden Drehimpuls L2. Diese beiden Drehimpulse heben sich auf. Beide Kreisel sind zusätzlich um die in Motorradquerrichtung weisenden Achsen 106 drehbar gelagert. Bei einer Kippung der drehenden Kreisel um diese Achsen ändert sich die Richtung der Drehimpulse L1 und L2.
Findet eine Kippung um diese Querachse in den eingezeichneten Richtungen statt, dann erhalten L1 und L2 jeweils eine nach oben weisende Komponente, welche sich zu einem nach oben weisenden Drehimpuls addieren.
Während dieser Drehbewegung entsteht damit in vertikaler Richtung eine Änderung des Drehimpulses pro Zeiteinheit, d.h. dL/dt ist ungleich Null, und damit ein in vertikale Richtung weisender Drehmomentenvektor. Dieser in vertikale Richtung weisende Drehmomentenvektor bewirkt eine Drehbewegung des Motorrads um seine Hochachse, d.h. eine Gierbewegung. Damit kann durch gezieltes Kippen der Kreisel um die Achsen 106 ein gewünschtes Giermoment auf das Motorrad aufgebracht werden.

Um kritische Situationen zu detektieren, bei denen es zu einem Ausbrechen der Fahrzeugachse kommt, kann ein Sensorcluster aus Inertialsensoren zur Messung von Drehraten und translatorischen Beschleunigungen und ein Raddrehzahlsensor benutzt werden. Mit diesen Sensorgrößen lässt sich der Fahrzeugschwimmwinkel bzw. der Schräglaufwinkel des Hinterrads abschätzen. Bei Motorrädern beträgt der Schwimmwinkel bei stabiler Fahrt typischerweise nur wenige Grad. Bei sprunghaftem Ansteigen des Schwimmwinkels ist von einer ausbrechenden Fahrzeugachse auszugehen. Das Steuergerät berechnet in diesem Fall das erforderliche Drehmoment bzw. Giermoment, um den Schwimmwinkel wieder auf typische Werte einer stabilen Fahrsituation zu reduzieren und steuert die Motoren der Kreiselsysteme dementsprechend an, so dass dieses Moment durch die Kreisel zur Verfügung gestellt wird.

Nach der Stabilisierung der Fahrsituation werden die Kreiseldrehachsen entsprechend langsam in ihre Ausgangsposition zurückgedreht, so dass der Fahrer keine nennenswerten durch die Kreiselbewegung hervorgerufenen Änderungen der Fahrdynamik verspürt. Haben die Kreisel die Ausgangsposition erreicht, dann heben sich die Kreiselwirkungen wieder gänzlich auf.

Der Ablauf einer Ausführungsform des erfindungsgemäßen Verfahrens ist in Fig. 2 dargestellt. Das Verfahren beginnt in Block 200. Anschließend wird in Block 201 abgefragt, ob ein instabiler Fahrzustand des Zweirads vorliegt. Ist dies nicht der Fall, dann wird zu Block 200 zurückverzweigt. Ist dies jedoch der Fall, dann werden in Block 202 die beiden Kreisel um ihre jeweilige Verschwenkungsachse mit einer ersten Winkelgeschwindigkeit verschwenkt, wobei die Verschwenkungsrichtungen entgegengesetzt zueinander sind. Danach werden in Block 203 die beiden Kreisel um ihre jeweilige Verschwenkungsachse mit einer zweiten Winkelgeschwindigkeit wieder in ihre Ursprungsorientierung zurückverschwenkt. In Block 204 endet das Verfahren.

## Patentansprüche

1. Verfahren zur Fahrstabilisierung eines motorisierten Zweirads (100), bei dem zwei nebeneinander angeordnete Kreisel (104, 105) mit zueinander paralleler Drehachse vorhanden sind, wobei die Kreisel jeweils um eine Verschwenkungsachse (106) senkrecht zur Drehachse verschwenkbar, wobei die Verschwenkungsachsen (106) der beiden Kreisel ebenfalls parallel zueinander sind,
- wobei die Kreisel (104, 105) in zueinander entgegengesetzter Drehrichtung um ihre Drehachsen rotieren,
- wobei bei einem detektierten instabilen Fahrverhalten (201) des Zweirads die beiden Kreisel (104, 105) um ihre jeweilige Verschwenkungsachse (106) mit einer ersten Winkelgeschwindigkeit verschwenkt werden, wobei die Verschwenkungsrichtungen entgegengesetzt zueinander sind (202),
**dadurch gekennzeichnet, dass**
- anschließend die beiden Kreisel (104, 105) um ihre jeweilige Verschwenkungsachse (106) mit einer zweiten Winkelgeschwindigkeit wieder in ihre Ursprungsorientierung zurückverschwenkt werden (203),
- wobei die Kreisel (104, 105) durch Elektromotoren angetrieben werden und mittels Elektromotoren verschwenkt werden.

2. Verfahren nach Anspruch 1, **dadurch gekennzeichnet, dass** die erste Winkelgeschwindigkeit größer als die zweite Winkelgeschwindigkeit ist.

3. Verfahren nach Anspruch 1, **dadurch gekennzeichnet, dass** die Drehachsen der Kreisel (104, 105) in Längsrichtung des Zweirads (100) weisen und dass die Verschwenkungsachsen (106) der Kreisel in Querrichtung des Zweirads (100) weisen.

4. Verfahren nach Anspruch 1, **dadurch gekennzeichnet, dass** ein instabiles Fahrverhalten dann als vorliegend detektiert wird, wenn der Schwimmwinkel des Zweirads oder der Schräglaufwinkel des Hinterrads des Zweirads einen vorgegebenen Grenzwert überschreitet.

5. Verfahren nach Anspruch 1, **dadurch gekennzeichnet, dass** ein instabiles Fahrverhalten dann als vorliegend detektiert wird, wenn die Änderung des Schwimmwinkels pro Zeiteinheit oder wenn die Änderung des Schräglaufwinkels des Hinterrads pro Zeiteinheit einen vorgegebenen Grenzwert überschreitet.

6. Verfahren nach Anspruch 1, **dadurch gekennzeichnet, dass** die beiden Kreisel bei einem detektierten instabilen Fahrverhalten um den gleichen Winkel und mit derselben Winkelgeschwindigkeit, aber in entgegengesetzte Richtung, verschwenkt werden.

7. Verfahren nach Anspruch 1, **dadurch gekennzeichnet, dass** die beiden Kreisel (104, 105) baugleich sind und mit derselben Winkelgeschwindigkeit, jedoch mit entgegengesetzter Drehrichtung, rotieren.

8. Verfahren nach Anspruch 1, **dadurch gekennzeichnet, dass** es sich bei dem Zweirad (100) um ein Motorrad handelt.

9. Steuergerät, ausgestattet mit dem Programmcode zur Durchführung des Verfahrens gemäß einem der Ansprüche 1 bis 8.

## Claims

1. Method for stabilizing the driving of a motorized two-wheeled vehicle (100), in which two gyroscopes (104, 105) which are arranged one next to the other and have rotational axes which are parallel with one another are present, wherein the gyroscopes can each be pivoted about a pivoting axis (106) perpendicularly with respect to the rotational axis, wherein the pivoting axes (106) of the two gyroscopes are also parallel with one another,
- wherein the gyroscopes (104, 105) rotate about their rotational axes in opposite rotational directions to one another,
- wherein, when an unstable driving behaviour (201) of the two-wheeled vehicle is detected, the two gyroscopes (104, 105) are pivoted about their respective pivoting axis (106) with a first angular speed, wherein the pivoting directions are opposite to one another (202),
**characterized in that**
- subsequently the two gyroscopes (104, 105) are pivoted (203) about their respective pivoting axis (106) again back into their original orientation with a second angular speed,
- wherein the gyroscopes (104, 105) are driven by electric motors and are pivoted by means of electric motors.

2. Method according to Claim 1, **characterized in that** the first angular speed is higher than the second angular speed.

3. Method according to Claim 1, **characterized in that** the rotational axes of the gyroscopes (104, 105) point in the longitudinal direction of the two-wheeled vehicle (100), and **in that** the pivoting axes (106) of the gyroscopes point in the transverse direction of the two-wheeled vehicle (100).

4. Method according to Claim 1, **characterized in that** an unstable driving behaviour is detected as being present when the side slip angle of the two-wheeled vehicle or the slip angle of the rear wheel of the two-wheeled vehicle exceeds a predefined limiting value.

5. Method according to Claim 1, **characterized in that** an unstable driving behaviour is detected as being present if the change in the side slip angle per unit of time or if the change in the slip angle of the rear wheel per unit of time exceeds a predefined limiting value.

6. Method according to Claim 1, **characterized in that** when an unstable driving behaviour is detected, the two gyroscopes are pivoted by the same angle and with the same angular speed, but in opposite directions.

7. Method according to Claim 1, **characterized in that** the two gyroscopes (104, 105) are structurally identical and rotate with the same angular speed but with opposite rotational directions.

8. Method according to Claim 1, **characterized in that** the two-wheeled vehicle (100) is a motorcycle.

9. Control device equipped with the program code for carrying out the method according to one of Claims 1 to 8.

## Revendications

1. Procédé de stabilisation du roulage d'un deux roues motorisé (100) dans lequel deux gyroscopes (104, 105) disposés l'un à côté de l'autre et dont les axes de rotation sont parallèles l'un à l'autre sont prévus, chacun des gyroscopes pouvant pivoter autour d'un axe de pivotement (106) perpendiculairement à son axe de rotation, les axes de pivotement (106) des deux gyroscopes étant également parallèles l'un à l'autre,
- les gyroscopes (104, 105) tournant autour de leur axe de rotation dans des sens de rotation mutuellement opposés,
- les deux gyroscopes (104, 105) pivotant à une première vitesse angulaire autour de leur axe de pivotement (106) lorsqu'un comportement de roulage instable (201) du deux roues a été détecté, les directions de pivotement étant mutuellement opposées (202),
**caractérisé en ce que**
- les deux gyroscopes (104, 105) sont ensuite ramenés à une première vitesse angulaire dans leur orientation initiale autour de leur axe de pivotement (106) respectif et
- **en ce que** les gyroscopes (104, 105) sont entraînés par des moteurs électriques et sont pivotés au moyen de moteurs électriques.

2. Procédé selon la revendication 1, **caractérisé en ce que** la première vitesse angulaire est supérieure à la deuxième vitesse angulaire.

3. Procédé selon la revendication 1, **caractérisé en ce que** les axes de rotation des gyroscopes (104, 105) sont orientés dans le sens de la longueur du deux roues (100) et **en ce que** les axes de pivotement (106) des gyroscopes sont orientés dans la direction transversale par rapport au deux roues (100).

4. Procédé selon la revendication 1, **caractérisé en ce que** la présence d'un comportement de roulage instable est détectée si l'angle de flottement du deux roues ou l'angle d'inclinaison de la roue arrière du deux roues dépassent une valeur limite prédéterminée.

5. Procédé selon la revendication 1, **caractérisé en ce que** la présence d'un comportement de roulage instable est détectée si une modification de l'angle de flottement par unité de temps ou si la modification de l'angle de déplacement oblique de la roue arrière par unité de temps dépassent une valeur limite prédéterminée.

6. Procédé selon la revendication 1, **caractérisé en ce que** lorsque la présence d'un comportement de roulage instable a été détectée, les deux gyroscopes sont inclinés du même angle et à la même vitesse angulaire mais dans des directions opposées.

7. Procédé selon la revendication 1, **caractérisé en ce que** les deus gyroscopes (104, 105) ont la même structure et tournent à la même vitesse angulaire, mais dans des sens de rotation opposés.

8. Procédé selon la revendication 1, **caractérisé en ce que** le deux roues (100) est une motocyclette.

9. Appareil de commande doté d'un code de programme permettant de mettre en oeuvre le procédé selon l'une des revendications 1 à 8.
